(19) Europäisches Patentamt
European Patent Office
Office européen des brevets

(11) EP 3 413 455 A1

(12) EUROPEAN PATENT APPLICATION

(43) Date of publication:
12.12.2018 Bulletin 2018/50

(51) Int Cl.:
H02M 7/483 (2007.01)   H02M 1/00 (2006.01)
H02M 1/32 (2007.01)

(21) Application number: 17290074.8

(22) Date of filing: 06.06.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: General Electric Technology GmbH
5400 Baden (CH)

(72) Inventors:
• Brehaut, Stephane
  Stafford, ST17 4LX (GB)
• De Preville, Guillaume
  91300 Massy (FR)

(74) Representative: Fischer, Michael Maria et al
General Electric Technology GmbH
GE Corporate Intellectual Property
Brown Boveri Strasse 7
5400 Baden (CH)

(54) **CONVERTERS AND METHODS OF OPERATION THEREOF**

(57)    Modular multilevel converter (MMC) apparatus and control methods are described in which a differential current reference value for controlling the MMC may be determined. The differential current reference value may be determined using an indication of a departure of the total energy and/or voltage of a first and second valve of the MMC from an intended value, an indication of a departure of the difference between the first and the second valve submodule differential energy and/or voltage from an intended value and a feedforward reference control signal based on at least one measured electrical parameter of the MMC.

Fig. 3

**Description**

FIELD OF THE INVENTION

The present invention relates to converters, and methods of operation thereof.

BACKGROUND OF THE INVENTION

Converters may be used to change the voltage level of a power source and/or to transfer power between a Direct Current (DC) and an Alternating Current (AC) connection. Converters are seen in all manner of electronic devices, from low power devices (for example, a battery in a computer may supply a particular voltage, but circuits therein may individually require a different voltage) to High Voltage Direct Current (HVDC) networks. For example, in the developing field of power transmission, it may be desirable to interconnect networks at different voltages, and/or convert from AC to DC or vice versa.

In relation to higher voltage converters, there is a developing interest in Voltage Source Converters (VSCs). These are highly controllable converters which can accurately produce desirable voltage forms with low harmonic components and allow full independent control of active and reactive power, and thus are able to meet the reactive power needs of a network, for example as a Static Compensator (STATCOM). Due to these advantages, VSCs are generally replacing thyristor based Current Source Converters (CSCs) as the technology of choice. A particular class of VSC is the Modular Multilevel Converter (MMC), which has a scalable topology that can be designed to operate at high voltages. MMCs can provide excellent harmonic performance and these advantages, combined with relative ease of timing control, have made MMCs the subject of much ongoing research and development.

An MMC VSC converter may comprise at least one (often three parallel) phase limbs, each limb comprising two valves. Each valve is made up of a plurality of submodules, each comprising an energy storage device, usually a capacitor. The submodules are arranged such that the energy storage device therein can be switched in or out of a series connection with the other energy storage devices in the valve.

In order to respond to an active and/or reactive power demand from the MMC, energy and voltage supplied by each submodule is generally controlled.

Two of the factors which may be considered during operation of the MMC are:

the sum of the submodules energy/voltage, referred to herein as the 'common energy/voltage'; and
the difference between first and the second valve submodule energy/voltage (which is controlled in order to avoid drift between the first and second arm valves), referred to herein as the 'differential energy/voltage'.

It has been proposed to control these values using feedback, such that when the common energy/voltage or the differential energy/voltage depart from the intended value as determined by measuring the voltage/energy of the submodules, the number of energy storage devices which are connected in series at at least one instance is changed to bring values back to intended operational ranges. In practice, this may mean adapting the timing with which the energy storage devices are placed into, or taken out of, a series connection within a valve.

According to a first aspect of the present invention, there is provided a method of controlling a modular multilevel converter (MMC) comprising at least one limb, each limb comprising a first valve and a second valve, each of the valves comprising a plurality of submodules, the method comprising:

determining a differential current reference value for controlling the MMC, wherein the differential current reference value is determined using:
an indication of a departure of the sum of the energy and/or voltage of the first and second valve from an intended value;
an indication of a departure of the difference between the first and the second valve submodule energy and/or voltage from an intended value; and
a feedforward reference control signal based on at least one measured electrical parameter of the MMC.

In some examples, the differential current reference value is a signal which is a combination (e.g. the sum) of:

an Energy/Voltage common controller output;
any feedforward signals added to the Energy/Voltage common controller;
an Energy/Voltage differential controller output; and
any feedforward signals added to the Energy/Voltage differential controller.

The reference control signal is a 'feedforward' control signal, which may be added to the output of a controller. This may therefore be distinguished from a 'feedback' control which may occur in a control loop, in which a measured value is compared to a reference value. In a 'feedforward' control signal, a measurement of an electrical parameter is used in its own right, without comparison to a reference value. Therefore, the method according to this aspect of the invention comprises a combined feedback and feedforward control mechanism.

The method may further comprise switching the submodules based on the differential current reference value.

As will be familiar to the skilled person, in controlling an MMC, a switching algorithm may be used to determine the timing with which energy storage devices within a submodule are switched to charge and/or discharge. As the number of energy storage devices which are switched into a series connection rises, so does the voltage of a valve. The voltage may for example be controlled according to a reference voltage. A switching algorithm may be determined such that, if, at a given instant, the voltage of a valve is below the voltage reference value, at least one more energy storage device is switched into a series connection. The timing of the switching may be referred to as a vector control strategy.

The measured electrical parameter may be a parameter which varies in the event of an adverse operating conditions and/or the feedforward reference control signal may be a control signal to counter an adverse operating condition.

In some examples, the adverse operational conditions may comprise an adverse network condition. Examples of adverse network conditions include disturbances (which may be transient) on a connected AC network, "fault to ground" conditions on either a connected AC or DC network or an imbalance in the DC grid (which may be seen as an imbalance between upper and lower DC connection busses, and which may cause an imbalance between valves unless addressed).

In other examples, the adverse operational conditions may comprise a converter condition, for example converter losses. These may for example comprise AC or DC valve losses (i.e. losses associated with AC and DC current components within a valve).

In some embodiments, the method may comprise measuring the measured parameter, wherein the measured parameter comprises at least one of: a valve voltage, a bus voltage, a limb current, a limb voltage, a limb inductance, a limb resistance or a valve resistance.

In some examples, the method may comprise combining the feedforward reference control signal with at least one feedback control signal (for example, an adjustment module output control signal) to provide a combined differential current reference value. The feedback control signal may comprise a measured value which is compared to a reference value (e.g. subtracted from the reference value) to provide an indication of an error on the input of a controller.

In some examples, the method may comprise combining the feedforward reference control signal with at least one feedback adjustment module output control signal, which may be an output of a controller which compares a reference signal with a feedback signal.

In some examples, the method may comprise combining the feedforward reference control signal with a feedback power adjustment module output control signal.

In some examples, the method may comprise combining the feedforward reference control signal with a feedback current reference, for example a feedback Energy/Voltage Common controller output control signal or a feedback power adjustment module output control signal.

In one example, the feedforward reference control signal may be a control signal to counter a change to active power which represents the disturbance as it will be seen at the submodules. Such a change may be seen in the case of an AC grid fault.

In another example the feedforward reference control signal may be a control signal to compensate for AC and/or DC power losses associated with a non-negligible resistance in a limb reactor and/or another non-negligible resistor in the valves.

In another example, the feedforward reference control signal may be a control signal to counter a change to a phase voltage, for example a change to a measured phase voltage magnitude. Such a change may be seen in the case of an AC grid fault.

In another example, the feedforward reference control signal may be a control signal to counter a change to a DC component of the phase current.

In some examples, a plurality of feedforward reference control signals may be determined and used in determining the differential current reference value.

According to a second aspect of the invention, there is provided a modular multilevel converter (MMC) comprising at least one limb, each limb comprising a first valve and a second valve, each of the valves comprising a plurality of submodules and control circuitry. The control circuitry comprises an energy/voltage common controller, an energy/voltage differential controller and a differential current controller wherein:

the energy/voltage common controller and the energy/voltage differential controller are configured to receive at least one reference input defining reference values for the total voltage levels of the submodules of each valve and at least one measured input of the total voltage levels of the submodules of each valve,
the energy/voltage common controller is configured to output a differential DC current component reference;
the energy/voltage differential controller is configured to output a differential AC current component reference;
the control circuitry further comprises circuitry configured to affect at least one of the differential DC current component reference and the differential AC current component reference using a feedforward reference control signal;

and the differential current controller is configured to utilise a sum of the differential DC current component reference and the differential AC current component reference as a reference value.

The circuitry may be configured to affect on the differential DC current component reference and/or the differential AC current component reference using the feedforward reference control signal by adjusting the reference value, or may influence or impact the determination thereof.

In some examples, the circuitry configured to affect at least one of the differential DC current component reference and the differential AC current component reference comprises circuitry to generate the feedforward reference control signal comprising a feedback power adjustment module to determine a signal to affect a power value from the Energy/Voltage common controller used to determine the differential DC current component reference.

In some examples, the circuitry configured to affect at least one of the differential DC current component reference and the differential AC current component reference comprises circuitry to generate the feedforward reference control signal comprising a feedback power adjustment module to determine a signal to affect (i.e. adjust, influence and/or impact) a power value from the Energy/Voltage differential controller used to determine the differential AC current component reference.

In some examples, the circuitry to generate the feedforward reference control signal comprises circuitry to determine AC power losses in a limb.

In some examples, the circuitry configured to affect at least one of the differential DC current component reference and the differential AC current component reference comprises at least one power adjustment module of the energy/voltage common controller and/or of the energy/voltage differential controller.

Embodiments of the inventions will now be described by way of example only with reference to the following drawings, of which:

**Figure 1A** is a schematic drawing of a multilevel converter;
**Figure 1 B** shows a submodule of the multilevel converter of Figure 1A;
**Figure 2** shows a schematic representation of an MMC control system;
**Figures 3-8** show examples of 'feedforward' reference control signals which may be used in control circuitry of an MMC.

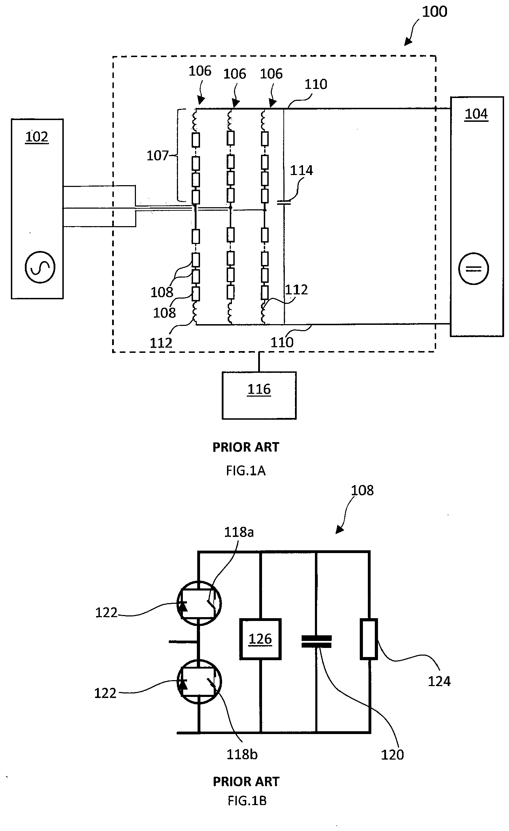

Shown in Figure 1A is a multilevel converter 100 arranged between an AC network 102 and a DC network 104. The multilevel converter 100 includes respective phase limbs 106 (collectively forming a bridge) of series-connected converter submodules 108 (only some of which are labelled for the sake of clarity), arranged between DC poles 110. The submodules 108 are further described in relation to Figure 1B below. Each limb 106 is made up of a first and a second (or top and bottom) valve 107 (only one of which is labelled for clarity). Therefore, as will also be familiar to the skilled person, such a converter 100 may be described as comprising six valves 107. The valves 107 comprise the series connection of submodules 108 between the AC connection to a limb 106 and a DC pole 110.

A valve reactor 112 (again, only two are labelled to avoid complicating the Figure) is also provided in each converter valve 107 to limit transient current flow between converter limbs 106 and thereby enable the connection and operation of the converter limbs 106. Also provided is a DC link capacitor 114, which operates to smooth the DC voltage. The converter 100 is under the control of converter control circuitry 116, which controls switching and monitoring functions. A 'broken line' notation is used in the limbs 106 to illustrate that there may be fewer or more submodules 108 provided than are illustrated.

As will be appreciated by the skilled person, a submodule 108 in this context is one of a number of such modules which are used to synthesis a voltage form in the converter 100 through selective switching of switches therein.

As shown in Figure 1B, in this example, each converter submodule 108 comprises a pair of switches in the form of series-connected IGBTs 118 connected in parallel with a capacitor 120, each associated with a unidirectional current device, in this case a diode 122, arranged in parallel with the IGBT switch 118. A first IGBT 118a is arranged between the terminals in series with the capacitor 120 and a second IGBT 118b is arranged to bypass the capacitor 120 when on. The capacitor 120 of each submodule 108 is configured to have a sufficiently high capacitive value in order to constrain the voltage variation at the capacitor terminals. The capacitor 120 is associated with a bleed resistance 124 to allow it to discharge. A submodule controller 126 is also provided and is arranged to switch the IGBTs 118a, b. The submodule controller 126 may be arranged to implement autonomous protection strategies and responds to instructions from converter control circuitry 116. In some known converter designs, communication between submodule controller 126 and converter control circuitry 116 utilises fibre optics.

The functioning of such a converter 100 will be familiar to the skilled person. Briefly, however, each submodule 108 as shown in Figure 1B may be controlled to assume different switching states in normal operation. The capacitor 120 is either inserted into the circuit or bypassed. More specifically, the capacitor 120 is inserted into the circuit when the first IGBT 118a is on and the second IGBT 118b is off, and it is bypassed when the first IGBT 118a is off and the second IGBT 118b is on. By controlling the IGBTs 118 in the submodules 108, voltage forms can be accurately synthesised.

As will be appreciated by the skilled person, the arrangement of Figure 1B is known as a half-bridge arrangement, and provides a 2-quadrant unipolar module that can provide zero or positive voltage and can conduct current in two directions. Although herein, a half-bridge submodule design is described, this is purely by way of example and other submodule designs are possible, such as a full bridge arrangement (or full H bridge), in which submodules comprise two pairs of switching elements (usually IGBTs) and an energy storage device (usually in the form of a capacitor). The pairs of switching elements are connected in parallel with the capacitor. This defines a four-quadrant bipolar module that can provide negative, zero or positive voltage and can conduct current in two directions. Full bridge submodules give certain advantages, such as improved fault handing (in particular, improved DC fault handling), but require more switching components and have higher operational losses. As the skilled person will appreciate, other submodule designs are being developed, including multiple level submodules (for example as described in WO2014/005634, WO2012/04027 and US2008/0198630, which are incorporated herein to the fullest extent allowable). Indeed, a converter may be a hybrid, containing more than one type of submodule 108. The principles set out herein could be applied to any submodule design as appropriate.

Further, the skilled person will be aware of alternative MMC designs, and the arrangement shown in Figure 1 is purely by way of an example of one such design. For example, the components, and/or the connections there between, may be configurable.

When the MMC is subject to an adverse condition, this may have an effect on the energy and voltage in the submodules 108.

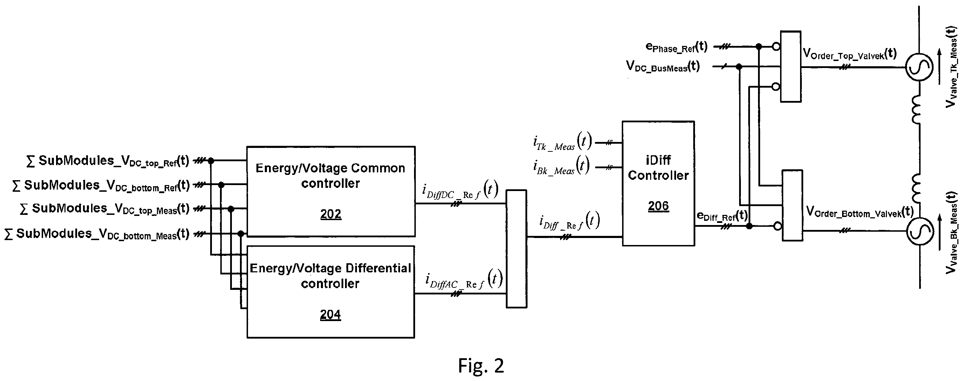

**Figure 2** shows an example schematic layout of control circuitry 116.

The control circuitry 116 in this example comprises an energy/voltage common controller 202, an energy/voltage differential controller 204 and a differential current controller 206.

The energy/voltage common controller 202 determines a current reference value based on the sum of the submodules energy and voltage of a limb 106, referred to herein as the 'common energy/voltage'. The energy/voltage differential controller 204 determines a differential current reference based on the difference between first (top) and the second (bottom) valve 107 submodule energy and voltage (which may controlled in order to avoid drift between the first and second valves 107), referred to herein as the 'differential energy/voltage'.

In Figure 2, it may be noted that the energy/voltage common controller 202 and the energy/voltage differential controller 204 are in series with the differential current controller 206, which receives inputs therefrom in order to control differential currents within the MMC. The energy/voltage common controller 202 and the energy/voltage differential controller 204 receive reference inputs and measured inputs. The reference inputs define reference values for the total voltage level of the submodules on each valve 107, $\sum SubModules\_V_{DC\_Top\_Ref}(t)$, $\sum SubModules\_V_{DC\_Bottom\_Ref}(t)$. The measured inputs comprise the total voltage level of the submodules on each valve 107, $\sum SubModules\_V_{DC\_Top\_Meas}(t)$, $\sum SubModules\_V_{DC\_Bottom\_Meas}(t)$.

The energy/voltage common controller 202 outputs a differential DC current component reference $i_{DiffDC\_Ref}$, which is supplied to the differential current controller 206. The energy/voltage differential controller outputs a differential AC current component reference $i_{DiffAC\_Ref}$, which is also supplied to the differential current controller 206.

The differential current controller 206 operates according to a differential current reference value signal $i_{Diff\_Ref}$ determined using both these outputs, in this example:

$$i_{Diff\_Ref} = i_{DiffDC\_Ref} + i_{DiffAC\_Ref}$$

The differential current controller 206 in this example provides a differential voltage output, $e_{Diff\_Ref}$, which is added to a 3-phase voltage reference ($e_{Phase\_Ref}$) and to a DC bus voltage measured ($V_{DC\_BusMeas}$). $e_{diff}$ is a measure of the voltage which drives the circulating current (i.e. the voltage across a limb reactor). The 3-phase top arms current is labelled as $i_{Tk\_Meas}$, and the 3-phase bottom arms currents are labelled as $i_{Bk\_Meas}$. The measured top and bottom valve voltages are labelled as $V_{Valve\_Tk\_Meas}$, $V_{Valve\_Bk\_Meas}$ respectively.

$V_{Order\_Top\_Valve}(t)$ and $V_{Order\_Bottom\_Valve}(t)$ are the reference signals sent to each of the valves 107. The reference signals are the sum of the phase voltage reference, $e_{Phase}(t)$, the DC bus voltage measured, $V_{DC\_Bus\_Meas}(t)$, and the voltage reference from the management of the valves, $e_{Diff\_Ref}(t)$.

In some examples, there may be a need to respond to an adverse operating condition. The condition may for example comprise any, or any combination of, an instantaneous active power on the AC grid, losses (and/or voltage drop) created by the parasitic resistor inside the limb reactor, or a difference in voltage between the top DC bus and the bottom DC bus on the DC grid side.

As has been noted above, the energy and voltage of each sub-module capacitor (or more generally, each energy storage device of each valve of an MMC) may be managed by controlling the timing of switching in order meet any active and reactive power demand. Such control may be termed vector control, or phase control.

In practice, this comprises controlling the common energy or voltage (i.e. the sum of the sub-modules Energy/Voltage in each valve 107) and the difference between the top (first) and the bottom (second) valves total sub-module Energy/Voltage (the differential energy/voltage) to avoid drift between the top and bottom arm valves. In the following description, principles are discussed in terms of controlling the energy rather than the voltage. However, it will be understood that these are related, such that controlling the energy stored effectively controls the voltage and vice versa.

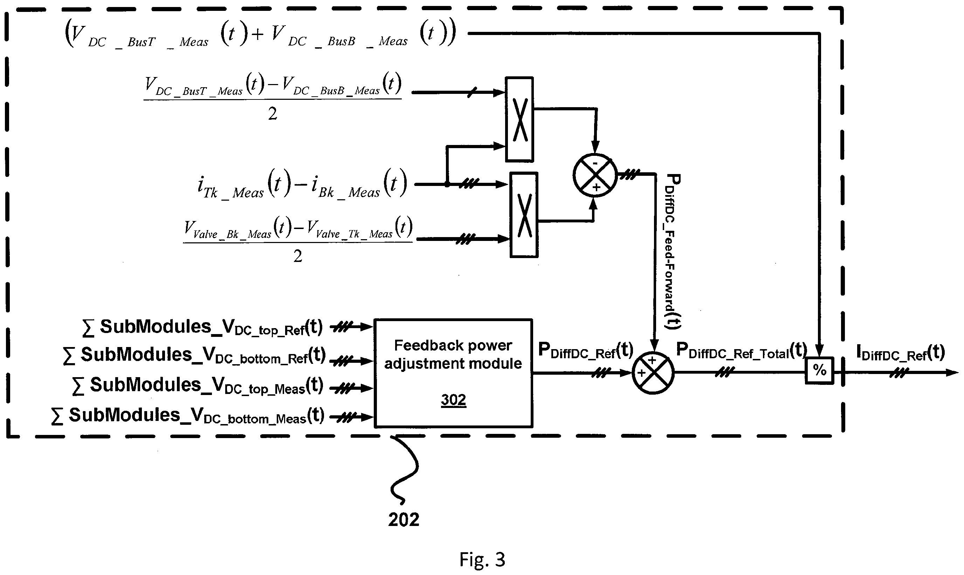

**Figure 3** shows a first example of a 'feedforward' which may be incorporated into control circuitry, in this example as part of the energy/voltage common controller 202.

This may be responsive to an adverse condition such as an AC fault condition on the AC grid, a DC voltage bus imbalance, or any disturbance or voltage variation on the total DC bus voltage.

As may be appreciated by the skilled person, while a fault on the AC grid occurs outside the MMC, it can have an impact on the functioning thereof. For example, during an AC fault, the phase current or the active power may drop which can disturb the submodule capacitor energy/voltage levels. Moreover, during the AC fault recovery, the phase current and/or the active power may increase rapidly, which may again disturb the submodule capacitor energy/voltage levels.

It may be noted that the inputs to the common controller 202 include those as described in relation to Figure 2. However, a feedforward signal $P_{DiffDC\_Feedforward}(t)$, is added to the output from the Energy/Voltage controller $P_{DiffDC\_Ref}(t)$ determined by a feedback power adjustment module 302. This feedforward signal is a measure of the active power which represents the disturbance as it will be seen at the submodules.

$P_{DiffDC\_ref}$ is the output from the feedback power adjustment module 302. To derive this value, the energy reference for the valves 107 is compared to the measured energy from the valves 107. The error is submitted to a Proportional-Integral (PI) controller, which outputs a power reference, $P_{DiffDC\_Ref}(t)$.

The feedforward signal is determined using measured top and bottom valve voltages $V_{Valve\_Tk\_Meas}$, $V_{Valve\_Bk\_Meas}$, the DC bus voltage measured from positive pole to DC grounding $V_{DC\_BusT\_Meas}$, the DC bus voltage measured from negative pole to DC grounding $V_{DC\_BusB\_Meas}$, 3-phase top arms currents $i_{Tk\_Meas}$, the 3-phase bottom arms currents $i_{Bk\_Meas}$, and/or the instantaneous 3-phase AC current $i_{Phase\_Meas}$ (the positive direction definition is from converter to the grid $i_{Phasek}$). k is the phase, for example in a 3-phase system, a, b or c. It may be noted that the phase current on the secondary side of the converter can be directly measured, $i_{Phasek}(t)$, or may be derived from the top and from the bottom arm current $i_{Phase\_Meas}(t)=(i_{Tk\_Meas}(t)-i_{Bk\_Meas}(t))$ (and therefore the limb current may be replaced by the converter phase current side on the converter)

The phase current affects the common energy through the active part with the DC bus unbalance voltage between $V_{DC\_BusT\_Meas}$ and $V_{DC\_BusB\_Meas}$. To compensate this influence, it is used to determine the feedforward along with the DC bus voltages and the valve voltages to determine $P_{DiffDC\_Feed-forward}(t)$:

$$P_{DiffDC\_Feed-Forward}(t) =$$

$$\left(i_{Phase}(t)\right)\cdot\left(-\left(\frac{V_{DC\_BusT\_Meas}(t) - V_{DCBusB\_Meas}(t)}{2}\right) + \left(\frac{V_{Valve\_Bk\_Meas}(t) - V_{Valve\_Tk\_Meas}(t)}{2}\right)\right)$$

These may then be used in determining the differential DC current component reference $i_{DiffDC\_Ref}$ using a division function (marked % in Figure 3) as follows:

$$i_{DiffDC\_Ref}(t) = \left(\frac{P_{DiffDC\_Ref}(t) + P_{DiffDC\_Feed-Forward}(t)}{V_{DC\_BusT\_Meas}(t) + V_{DC\_BusB\_Meas}(t)}\right)$$

Using the total DC bus voltage in determining the reference value means that the same level of dynamic control will be provided for any DC bus voltage magnitude.

As noted above, $i_{DiffDC\_Ref}$ is used in determining $i_{Diff\_Ref}$.

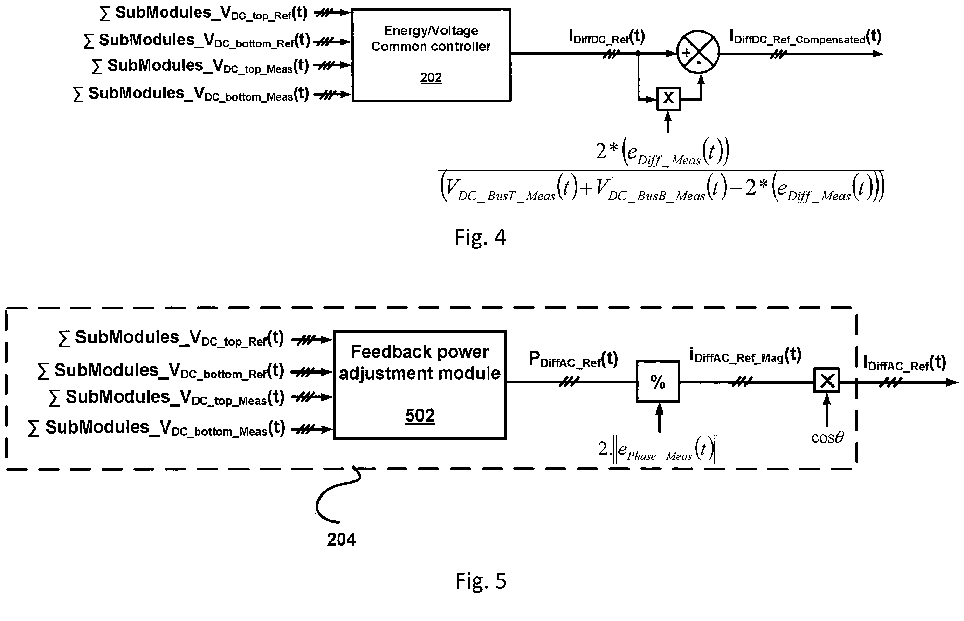

**Figure 4** shows a second example of how a feedforward which may be incorporated into control circuitry. In this example, this may be responsive to an adverse condition such as a non-negligible resistance, $R_L$, in a limb reactor and/or a non-negligible resistance in the valves, $R_{valve}$.

As with Figure 3, it may be noted that the inputs to the common controller 202 are as described in relation to Figure 2. However, a feedforward signal may be combined with the output thereof, $i_{DiffDC\_Ref}$. In some examples, this may be $i_{DiffDC\_Ref}$ as determined following the action of the first feedforward signal determined as described with reference to Figure 3. The feedforward compensates for both AC and DC losses associated with the presence of the $R_L$ and/or $R_{valve}$.

In this example, a feedforward signal is determined using the limb reactance $L_L$, as well as $R_L$, $R_{valve}$, $V_{DC\_BusT\_Meas}$, $V_{DC\_BusB\_Meas}$, $i_{Tk\_Meas}$, and $i_{Bk\_Meas}$, as defined above.

With these values, $e_{Diff\_k}$, the voltage which drives the circulating current is determined using the relationship:

$$e_{Diff\_Meas}(t) = L_L . \frac{di_{Diff\_Meas}(t)}{dt} + (R_L).i_{Diff\_Meas}(t) =$$

$$L_L . \frac{1}{2} . \frac{d(i_{TK\_Meas}(t) + i_{BK\_Meas}(t))}{dt} + (R_L) . \frac{(i_{Tk\_Meas}(t) + i_{Bk\_Meas}(t))}{2}$$

It may be noted that the voltages and currents may be monitored over time, in some examples at least substantially continuously, whereas L and R are measured based on the characteristics of the Limb reactor.

A new differential DC current component reference may be determined using the relationship:

$$i_{DiffDC\_Ref\_Compensated}(t) = i_{DiffDC\_Ref}(t)\left(1 + \left(\frac{2.(e_{Diff\_Meas}(t))}{V_{DC\_BusT\_Meas}(t) + V_{DC\_BusB\_Meas}(t) - 2.(e_{Diff\_Meas}(t))}\right)\right)$$

This may provide an input to the differential current controller 206.

**Figure 5** shows a third example of a feedforward which may be incorporated into control circuitry. This may be responsive to an adverse condition such as fault on the AC grid, for example to allow for a fall in the magnitude of the measured phase voltage $e_{Phase}$ which may result in such a fault.

In this example, the feedforward is applied to the output of a feedback power reference adjustment module 502 of a differential controller 204. In this example, the feedback power reference adjustment module 502 may comprise a PI or a PID controller.

It may be noted that the inputs to the differential controller 204 are as described in relation to Figure 2. However, a feedforward signal is combined with $P_{DiffAC\_Ref}$, a feedback power reference output. The feedforward signal, which in this example compensates for losses, is added to the Feedback power adjustment module 502 output and the result is divided by the measured phase voltage magnitude $e_{Phase\_Meas}$ which results in a determination of $I_{DiffAC\_ref}$ which incorporates a feedforward, and which may be used to determine $i_{Diff\_Ref}$.

In this example, the feedforward signal is determined using the $V_{valve\_Tk\_Meas}$, $V_{valve\_Bk\_Meas}$. $V_{DC\_BusT\_Meas}$, $V_{DC\_BusB\_Meas}$, as described above.

With these values, $e_{Phase\_k}$, the voltage which drives the circulating current is determined using the relationship:

$$\left\| e_{Phase\_Meas}(t) \right\| = \left\| \frac{1}{2} . (V_{Valve\_Bk\_Meas}(t) - V_{Valve\_Tk\_Meas}(t)) + \frac{1}{2} . (V_{DC\_BusT\_Meas}(t) - V_{DC\_BusB\_Meas}(t)) \right\|$$

This can be used to determine $I_{DiffAC\_ref}(t)$ using the relationship:

$$I_{DiffAC\_ref}(t) = \frac{P_{DiffAC\_Ref}(t)}{2.\left\| e_{Phase\_Meas}(t) \right\|} . \cos(\theta)$$

It may be noted that, in some cases of AC grid fault, the control of the energy differential may be difficult as

$e_{Phase}$ may be low, even approaching zero volts. $I_{Diff\_Ref}$ has less of an impact on the Differential Energy Controller 204 when the AC voltage magnitude $e_{Phase}$ is near zero, so this means that the value of $I_{Diff\_Ref}$ may be intended to be high to obtain the same response as when $e_{Phase}$ is in normal operational ranges.

In order to maintain a dynamic response of the controller for any $e_{Phase}$ magnitude, the gain of the controller may be adaptive and dependent on $e_{Phase}$. By using the value of $e_{Phase}$ in order to determine the value of $I_{Diff\_Ref}$, similar dynamic response characteristics may be seen both during steady state and fault conditions.

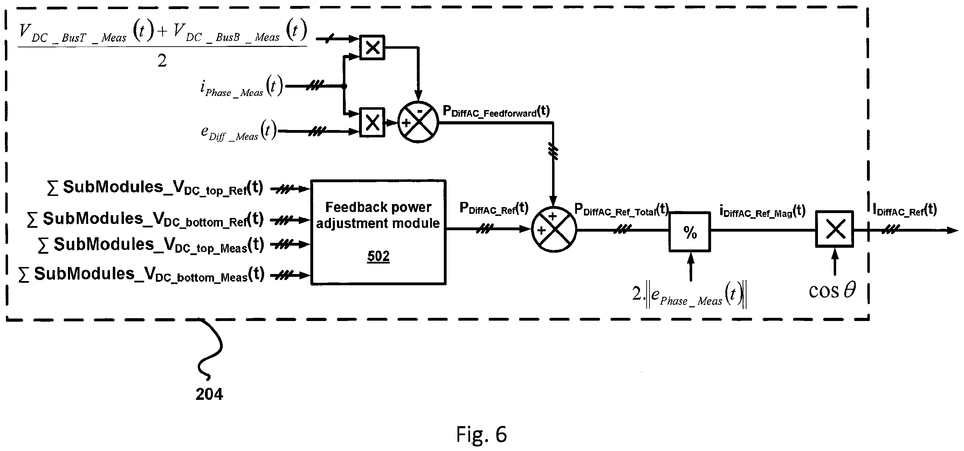

**Figure 6** shows a fourth example, showing two feedforward signals which may be incorporated into control circuitry. For example, these feedforward signals may be responsive to a DC component in the measured phase current $i_{Phase_k}(t)$ added to a non-negligible resistance, $R_L$, in the limb reactor is the adverse condition which creates a DC component in $e_{Diff}(t)$. In another example, this may be responsive to an adverse condition such as fault on the AC grid, for example to allow for a fall in the magnitude of the measured phase voltage $e_{Phase}$ which may result from such a fault.

In this example, a feedforward signal is applied to the output of a feedback power adjustment module 502 of a differential controller 204, as previously described in relation to Figure 5. It may again be noted that the inputs to the differential controller 204 are as described in relation to Figure 2. However, a feedforward signal $P_{DiffAC\_FeedForward}(t)$ is combined with $P_{DiffAC\_Ref}(t)$.

In this example, the feedforward signal is determined using the $V_{valve\_Tk\_Meas}$, $V_{valve\_Bk\_Meas}$, $i_{Tk\_Meas}$, and $i_{Bk\_Meas}$ as defined above.

With these values, $i_{phase\_meas}(t)$ and $e_{Diff\_meas}(t)$ (the DC component of which represents the losses from the limb resistor $R_L$), may be determined:

$$i_{Phase\_Meas}(t) = \left( i_{Tk\_Meas}(t) - i_{Bk\_Meas}(t) \right)$$

$$e_{Diff\_Meas}(t) = \left( \frac{\left( V_{DC\_BusT\_Meas}(t) + V_{DC\_BusB\_Meas}(t) \right) - \left( V_{Valve\_Tk\_Meas}(t) + V_{ValveBk\_Meas}(t) \right)}{2} \right)$$

These in turn may be used to determine a feedforward signal:

$$P_{DiffAC\_FeedForward}(t) = i_{Phase\_Meas}(t) \cdot \left( e_{Diff\_Meas}(t) - \left( \frac{V_{DC\_BusT\_Meas}(t) + V_{DC\_BusB\_Meas}(t)}{2} \right) \right)$$

The power transferred $i_{Phase\_Meas}(t) * e_{Diff\_Meas}(t)$ is directly compensated through a feedforward loop. This may provide an improved control dynamic and a higher stability in case of DC component on each phase current $i_{Phase}$.

$P_{DiffAC\_FeedForward}(t)$ may be combined with the output of the differential controller to obtain $P_{DiffAC\_ref}$:

$$P_{DiffAC\_Ref\_Total}(t) = P_{DiffACRef}(t) + P_{DiffAC\_FeedForward}(t)$$

$$I_{DiffAC\_ref}(t) = \frac{\left( P_{DiffAC\_Ref}(t) + P_{DiffAC\_FeedForward}(t) \right)}{2 \cdot \left\| e_{Phase\_Meas}(t) \right\|} \cdot \cos(\theta)$$

$$I_{DiffAC\_ref}(t) = \frac{P_{DiffAC\_Ref\_Total}(t)}{2 \cdot \left\| e_{Phase\_Meas}(t) \right\|} \cdot \cos(\theta)$$

In some examples, the value for $P_{DiffAC\_Ref}$ may be processed with the feedforward of Figure 5 to provide $I_{DiffAC\_ref}$. In other examples, $I_{DiffAC\_Ref}$ may be determined with a second feedforward, as shown in Figure 6.

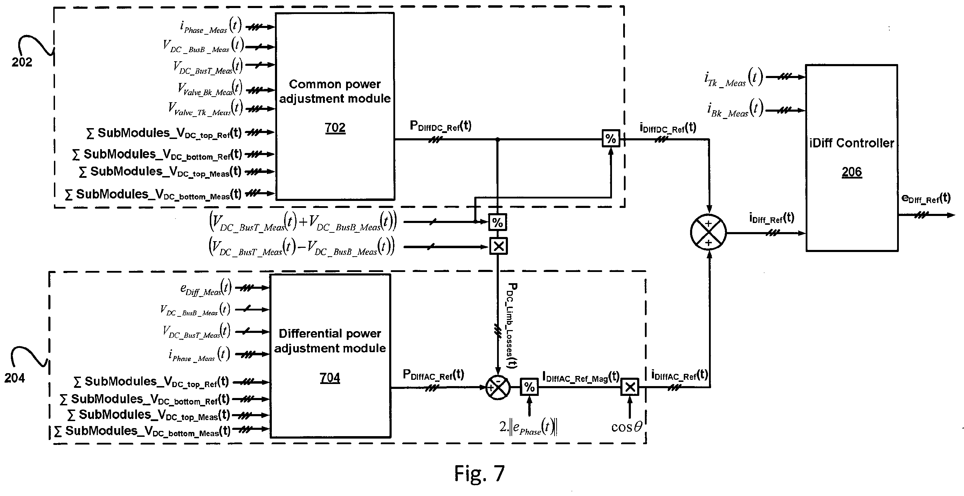

**Figure 7** shows a fifth example of a feedforward signal which may be incorporated into control circuitry. This may be responsive to a non-negligible resistor, $R_L$, in the limb reactor, which may result in power losses. This feedforward considers DC power losses.

In this example, the feedforward is applied to an output of a common power adjustment module 702 of the common controller 202 and a differential power adjustment module 702 of the differential controller 204 and is determined using $V_{DC\_BusT\_Meas}$, $V_{DC\_BusB\_Meas}$, as defined above. The power adjustment modules provide feedforwards to be combined with the feedback power adjustment modules.

Figure 7 assumes that the feedforward signals as described with reference to Figures 3, 4 and 6 have been applied, but this need not be the case in all examples, and the feedforward may be used alone or in common with any, or any combination, of the previously described feedforward signals.

A determination of the DC power losses in a limb may be made using the relationship:

$$P_{DC\_Limb\_Losses}(t) = \frac{\left(V_{DC\_BusT\_Meas}(t) - V_{DC\_BusB\_Meas}(t)\right)\left(P_{DiffDC\_Ref}(t)\right)}{\left(V_{DC\_BusT\_Meas}(t) + V_{DC\_BusB\_Meas}(t)\right)}$$

$$i_{DiffAC\_ref}(t) = \frac{P_{DiffAC\_Ref}(t) - P_{DC\_Limb\_Losses}(t)}{2 \cdot \|e_{Phase\_Meas}(t)\|} \cdot \cos(\theta)$$

$i_{DiffAC\_ref}(t)$ may be expressed as

$$i_{DiffDC\_Ref}(t) = \left(\frac{P_{DiffDC\_Ref}(t)}{V_{DC\_BusT\_Meas}(t) + V_{DC\_BusB\_Meas}(t)}\right)$$

$$i_{Diff\_Ref}(t) = \left(i_{DiffDC}(t) + i_{DiffAC}(t)\right)$$

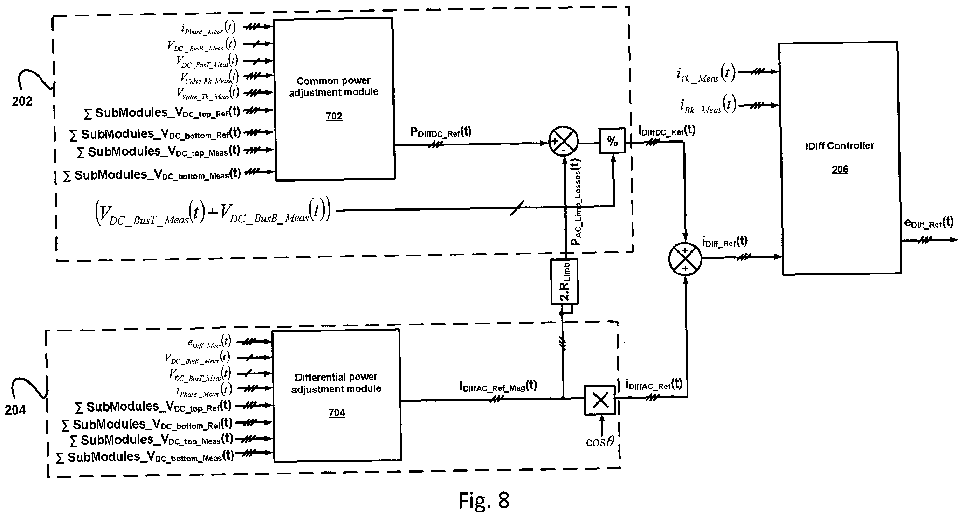

**Figure 8** shows a sixth example of a feedforward signal which may be incorporated into control circuitry. This may be responsive to a non-negligible resistor, $R_L$ ($RI_{imb}$), in the limb reactor, which may result in power losses. This feedforward considers AC power losses.

This feedforward signal may be determined using the output of the controller differential power adjustment module 704, $I_{DiffAC\_Ref\_Mag}(t)$ (wherein $I_{DiffAC\_Ref\_Mag}(t)$ is the output of a differential power adjustment module 704 of the differential controller 204 and a feedforward of the common power control) and $R_L$:.

$$P_{AC\_Limb\_Losses}(t) = 2 \cdot R_L \cdot \left(I_{DiffAC\_Ref\_Mag}(t)\right)^2$$

In this example, the feedforward signal is applied to an output of the differential power adjustment module 704 and is determined using $I_{DiffAC\_Ref\_Mag}(t)$.

Figure 8 assumes that the feedforward signals as described with reference to Figures 3, 4 and 6 have been applied, but this need not be the case in all examples, and the feedforward may be used alone or in common with any, or any combination, of the previously described feedforward signals.

A determination of the AC power losses in a limb may be made using the relationship:

$$i_{DiffDC\_ref}(t) = \frac{P_{DiffDC\_Ref}(t) - P_{AC\_Limb\_Losses}(t)}{V_{DC\_BusT\_Meas}(t) + V_{DC\_BusB\_Meas}(t)}$$

$$i_{Diff\_Ref}(t) = \left(i_{DiffDC\_Ref}(t) + i_{DiffAC\_Ref}(t)\right)$$

This in turn may be used to determine $I_{DiffAC\_Ref\_Mag}(t)$

Examples in the present disclosure can be provided as at least in part as machine readable instructions, such as any combination of software, hardware, firmware or the like. Such machine readable instructions may be included on a computer readable storage medium (including but is not limited to disc storage, CD-ROM, optical storage, etc.) having computer readable program codes therein or thereon.

The machine readable instructions may, for example, be executed by a general purpose computer, a special purpose computer, an embedded processor or processors of other programmable data processing devices to realize the functions described in the description and diagrams. In particular, a processor or processing apparatus may execute the machine readable instructions. Thus functional modules of the apparatus and devices may be implemented at least in part by a processor executing machine readable instructions stored in a memory, or a processor operating in accordance with instructions embedded in logic circuitry. The term 'processor' is to be interpreted broadly to include a CPU, processing unit, ASIC, logic unit, or programmable gate array etc. The methods and functional modules may all be performed by a single processor or divided amongst several processors.

Such machine readable instructions may also be stored in a computer readable storage that can guide the computer or other programmable data processing devices to operate in a specific mode.

Such machine readable instructions may also be loaded onto a computer or other programmable data processing devices, so that the computer or other programmable data processing devices perform a series of operations to produce computer-implemented processing.

Further, the teachings herein may be implemented in the form of a computer software product, the computer software product being stored in a storage medium and comprising a plurality of instructions for making a computer device implement the methods recited in the examples of the present disclosure.

While the method, apparatus and related aspects have been described with reference to certain examples, various modifications, changes, omissions, and substitutions can be made without departing from the spirit of the present disclosure. It is intended, therefore, that the method, apparatus and related aspects be limited only by the scope of the following claims and their equivalents. It should be noted that the above-mentioned examples illustrate rather than limit what is described herein, and that those skilled in the art will be able to design many alternative implementations without departing from the scope of the appended claims. Features described in relation to one example may be combined with features of another example. In particular, the feedforward signals may be combined in any combination.

The word "comprising" does not exclude the presence of elements other than those listed in a claim, "a" or "an" does not exclude a plurality, and a single processor or other unit may fulfil the functions of several units recited in the claims.

**Claims**

1. A method of controlling a modular multilevel converter (100) (MMC) comprising at least one limb (106) comprising a first valve (107) and a second valve (107), each of the valves (107) comprising a plurality of submodules (108), the method comprising:

    determining a differential current reference value for controlling the MMC, wherein the differential current reference value is determined using:

       an indication of a departure of the total energy and/or voltage of the first and second valve (107) from an intended value;
       an indication of a departure of the difference between the first and the second valve (107) submodule (108) differential energy and/or voltage from an intended value; and
       a feedforward reference control signal based on at least one measured electrical parameter of the MMC.

2. A method as claimed in claim 1, further comprising switching submodules (108) based on the differential current reference value.

3. A method as claimed in any preceding claim, comprising, switching at least one energy storage device into a series connection if a voltage of a valve (107) is below a voltage reference value.

4. A method as claimed in any preceding claim, wherein the measured electrical parameter is a parameter which varies in an event of an adverse operating condition.

5. A method as claimed in any preceding claim, wherein the feedforward reference control signal is a control signal to counter an adverse operating condition.

**6.** A method as claimed in any preceding claim, further comprising combining at least one feedforward reference control signal with at least one feedback adjustment module output control signal to provide a combined differential current reference value.

**7.** A method as claimed in any preceding claim, further comprising combining at least one feedforward reference control signal with a feedback power adjustment module (302, 502) output control signal.

**8.** A method as claimed in any preceding claim, further comprising combining at least one feedforward reference control signal with an Energy/Voltage Common controller output control signal.

**9.** A method as claimed in any preceding claim, further comprising combining at least one feedforward reference control signal with a feedback power adjustment module (302, 502) output control signal.

**10.** A method as claimed in any preceding claim, wherein a plurality of feedforward reference control signals are determined and used in determining the differential current reference value.

**11.** A modular multilevel converter (100) (MMC) comprising:

at least one limb (106) comprising a first valve (107) and a second valve (107), each of the valves (107) comprising a plurality of submodules (108); and control circuitry (116) comprising an energy/voltage common controller (202), an energy/voltage differential controller (204) and a differential current controller (206) wherein:

the energy/voltage common controller (202) and the energy/voltage differential controller (204) are configured to receive at least one reference input defining reference values for the total voltage levels of the submodules (108) of each valve (107) and at least one measured input of a total voltage level of the submodules (108) of each valve (107),
the energy/voltage common controller (202) is configured to output a differential DC current component reference;
the energy/voltage differential controller (204) is configured to output a differential AC current component reference;
the control circuitry (116) further comprises circuitry configured to affect at least one of the differential DC current component reference and the differential AC current component reference using a feedforward reference control signal; and
the differential current controller (206) is configured to utilise a sum of the differential DC current component reference and the differential AC current component reference as a reference value.

**12.** An MMC (100) according to claim 11, wherein the circuitry configured to affect at least one of the differential DC current component reference and the differential AC current component reference comprises circuitry to generate the feedforward reference control signal comprising a feedback power adjustment module (302, 502) to determine a signal to modify a power value used to determine the differential DC current component reference.

**13.** An MMC (100) according to claim 11 or claim 12, wherein the circuitry configured to affect at least one of the differential DC current component reference and the differential AC current component reference comprises circuitry to generate the feedforward reference control signal comprising a feedback power adjustment module (302, 502) to determine a signal to modify a power value used to determine the differential AC current component reference.

**14.** An MMC (100) according to claim 12, wherein the circuitry to generate the feedforward reference control signal comprises circuitry to determine AC power losses in a limb (106).

**15.** An MMC (100) according to any of claims 11 to 14, wherein the circuitry configured to affect at least one of the differential DC current component reference and the differential AC current component reference comprises at least one power adjustment module of the energy/voltage common controller (202) and/or of the energy/voltage differential controller (204).

PRIOR ART

FIG.1A

PRIOR ART

FIG.1B

Fig. 2

EP 3 413 455 A1

$$\left(V_{DC\_BusT\_Meas}(t) + V_{DC\_BusB\_Meas}(t)\right)$$

$$\frac{V_{DC\_BusT\_Meas}(t) - V_{DC\_BusB\_Meas}(t)}{2}$$

$$i_{Tk\_Meas}(t) - i_{Bk\_Meas}(t)$$

$$\frac{V_{Valve\_Bk\_Meas}(t) - V_{Valve\_Tk\_Meas}(t)}{2}$$

$\sum$ SubModules_$V_{DC\_top\_Ref}$(t)

$\sum$ SubModules_$V_{DC\_bottom\_Ref}$(t)

$\sum$ SubModules_$V_{DC\_top\_Meas}$(t)

$\sum$ SubModules_$V_{DC\_bottom\_Meas}$(t)

Feedback power adjustment module

302

$P_{DiffDC\_Feed-Forward}(t)$

$P_{DiffDC\_Ref}(t)$

$P_{DiffDC\_Ref\_Total}(t)$

$I_{DiffDC\_Ref}(t)$

%

202

Fig. 3

EP 3 413 455 A1

$\sum$ SubModules_$V_{DC\_top\_Ref}$(t)

$\sum$ SubModules_$V_{DC\_bottom\_Ref}$(t)

$\sum$ SubModules_$V_{DC\_top\_Meas}$(t)

$\sum$ SubModules_$V_{DC\_bottom\_Meas}$(t)

Energy/Voltage
Common controller

202

$I_{DiffDC\_Ref}$(t)

$I_{DiffDC\_Ref\_Compensated}$(t)

$$\frac{2*\left(e_{Diff\_Meas}(t)\right)}{\left(V_{DC\_BusT\_Meas}(t)+V_{DC\_BusB\_Meas}(t)-2*\left(e_{Diff\_Meas}(t)\right)\right)}$$

**Fig. 4**

$\sum$ SubModules_$V_{DC\_top\_Ref}$(t)

$\sum$ SubModules_$V_{DC\_bottom\_Ref}$(t)

$\sum$ SubModules_$V_{DC\_top\_Meas}$(t)

$\sum$ SubModules_$V_{DC\_bottom\_Meas}$(t)

Feedback power
adjustment module

502

$P_{DiffAC\_Ref}$(t)

%

$i_{DiffAC\_Ref\_Mag}$(t)

$2.\left\|e_{Phase\_Meas}(t)\right\|$

$\cos\theta$

$I_{DiffAC\_Ref}$(t)

204

**Fig. 5**

$$\frac{V_{DC\_BusT\_Meas}(t) + V_{DC\_BusB\_Meas}(t)}{2}$$

$i_{Phase\_Meas}(t)$

$e_{Diff\_Meas}(t)$

$P_{DiffAC\_Feedforward}(t)$

$\sum$ SubModules_$V_{DC\_top\_Ref}(t)$

$\sum$ SubModules_$V_{DC\_bottom\_Ref}(t)$

$\sum$ SubModules_$V_{DC\_top\_Meas}(t)$

$\sum$ SubModules_$V_{DC\_bottom\_Meas}(t)$

Feedback power adjustment module

502

$P_{DiffAC\_Ref}(t)$

$P_{DiffAC\_Ref\_Total}(t)$

%

$i_{DiffAC\_Ref\_Mag}(t)$

$I_{DiffAC\_Ref}(t)$

$2.\|e_{Phase\_Meas}(t)\|$

$\cos\theta$

204

Fig. 6

Fig. 7

EP 3 413 455 A1

202

$i_{Phase\_Meas}(t)$
$V_{DC\_BusB\_Meas}(t)$
$V_{DC\_BusT\_Meas}(t)$
$V_{Valve\_Bk\_Meas}(t)$
$V_{Valve\_Tk\_Meas}(t)$
Σ SubModules_$V_{DC\_top\_Ref}$(t)
Σ SubModules_$V_{DC\_bottom\_Ref}$(t)
Σ SubModules_$V_{DC\_top\_Meas}$(t)
Σ SubModules_$V_{DC\_bottom\_Meas}$(t)

Common power adjustment module
702

$P_{DiffDC\_Ref}$(t)

$(V_{DC\_BusT\_Meas}(t) + V_{DC\_BusB\_Meas}(t))$

$P_{AC\_Limb\_Losses}(t)$

%

$i_{DiffDC\_Ref}$(t)

$2.R_{Limb}$

$i_{Tk\_Meas}(t)$
$i_{Bk\_Meas}(t)$

iDiff Controller
206

$i_{Diff\_Ref}$(t)

$e_{Diff\_Ref}$(t)

204

$e_{Diff\_Meas}(t)$
$V_{DC\_BusB\_Meas}(t)$
$V_{DC\_BusT\_Meas}(t)$
$i_{Phase\_Meas}(t)$
Σ SubModules_$V_{DC\_top\_Ref}$(t)
Σ SubModules_$V_{DC\_bottom\_Ref}$(t)
Σ SubModules_$V_{DC\_top\_Meas}$(t)
Σ SubModules_$V_{DC\_bottom\_Meas}$(t)

Differential power adjustment module
704

$I_{DiffAC\_Ref\_Mag}$(t)

$i_{DiffAC\_Ref}$(t)

$\cos\theta$

Fig. 8

18

Europäisches
Patentamt

European
Patent Office

Office européen
des brevets

# EUROPEAN SEARCH REPORT

Application Number

EP 17 29 0074

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VASILADIOTIS MICHAIL ET AL: "Impact of Grid Asymmetries on the Operation and Capacitive Energy Storage Design of Modular Multilevel Converters", IEEE TRANSACTIONS ON INDUSTRIAL ELECTRONICS, IEEE SERVICE CENTER, PISCATAWAY, NJ, USA, vol. 62, no. 11, November 2015 (2015-11), pages 6697-6707, XP011586102, ISSN: 0278-0046, DOI: 10.1109/TIE.2015.2437329 [retrieved on 2015-10-07] * the whole document * | 1-15 | INV. H02M7/483 ADD. H02M1/00 H02M1/32 |
| X | CUI SHENGHUI ET AL: "A comprehensive cell capacitor energy control strategy of a modular multilevel converter (MMC) without a stiff DC bus voltage source", 2014 IEEE APPLIED POWER ELECTRONICS CONFERENCE AND EXPOSITION - APEC 2014, IEEE, 16 March 2014 (2014-03-16), pages 602-609, XP032591226, DOI: 10.1109/APEC.2014.6803370 [retrieved on 2014-04-21] | 1-3, 11-13,15 | |
| A | * figure 3 * * section II. * | 4-10,14 | |
| A | ANTONIOS ANTONOPOULOS ET AL: "On dynamics and voltage control of the Modular Multilevel Converter", 13TH EUROPEAN CONFERENCE ON POWER ELECTRONICS AND APPLICATIONS, 2009 : EPE '09 ; 8 - 10 SEPT. 2009, BARCELONA, SPAIN, IEEE, PISCATAWAY, NJ, USA, 8 September 2009 (2009-09-08), pages 1-10, XP031541295, ISBN: 978-1-4244-4432-8 * the whole document * | 1-15 | |

TECHNICAL FIELDS
SEARCHED    (IPC)

H02M

The present search report has been drawn up for all claims

| Place of search | Date of completion of the search | Examiner |
|---|---|---|
| The Hague | 23 November 2017 | Lochhead, Steven |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014005634 A
- WO 201204027 A
- US 20080198630 A